# EUROPEAN PATENT SPECIFICATION

(11) **EP 1 895 369 B1**
(45) Date of publication and mention of the grant of the patent: **23.12.2009**
(21) Application number: 06756998.8
(22) Date of filing: 06.06.2006
(51) Int. Cl.: G03H 1/26, G11B 7/0065, G11B 7/135, G11B 7/125

(54) **HOLOGRAM TYPE REPRODUCING DEVICE**
WIEDERGABEEINRICHTUNG DES HOLOGRAMMTYPS
DISPOSITIF DE REPRODUCTION DE TYPE HOLOGRAMME

(30) Priority: 09.06.2005 JP 2005169477
(43) Date of publication of application: 05.03.2008
(73) Proprietor: ALPS ELECTRIC CO., LTD., Tokyo 145-8501 (JP)
(72) Inventor: UMEDA, Yuichi, Tokyo 145-8501 (JP)
(74) Representative: Klunker . Schmitt-Nilson . Hirsch
(86) International application number: PCT/JP2006/311258
(87) International publication number: WO 2006/132198

(56) References cited:
- EP-A2- 1 531 466
- WO-A1-2005/047987
- JP-A- 11 002 758
- US-A1- 2002 075 776
- US-A1- 2003 231 573

## Description

### Technical Field

The present invention relates to holographic reproducing apparatuses recording and/or reproducing multiple-recorded data information onto and/or from holographic recording media

### Background Art

A typical holographic reproducing apparatus can record information on recording media at predetermined positions and can read information recorded on the recording media by moving a collimating lens in a direction orthogonal to the optical axis thereof (see Patent Document 1).

In a holographic reproducing apparatus as shown in Patent Document 1, an image height (object height) generated by an inclination of the central line of a laser beam with respect to the optical axis of the collimating lens is observed when the collimating lens is moved in the direction orthogonal to the optical axis. This leads to an increase in aberration, and it becomes difficult to accurately reproduced holograms.

Therefore, an inverse meniscus collimating lens 1 whose convex surface faces a light source as shown in Fig. 8, for example, has been employed (for example, Patent Document 2). In this case, the aberration can be regulated to a desired level or less even when the collimating lens 1 is moved in the direction orthogonal to the optical axis (X directions) and the image height is increased to a certain level.
Patent Document 1: Japanese Unexamined Patent Application Publication No. 2005-032306
Patent Document 2: Japanese Unexamined Patent Application Publication No. 11-120610

A holographic reproduction apparatus according to the preamble of claim 1 is disclosed in US 2003/0 231 573 A1.

### Disclosure of Invention

### Problems to be Solved by the Invention

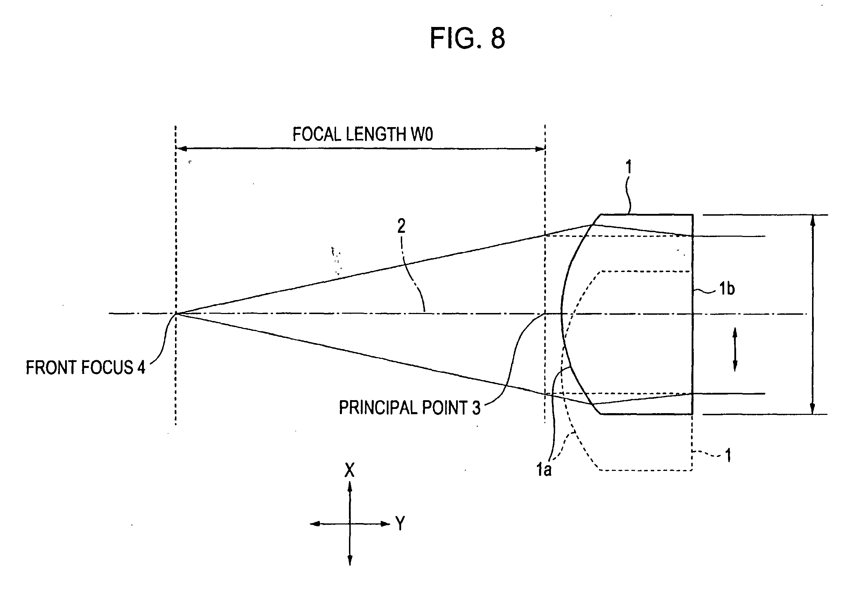

As shown in Fig. 8, the inverse meniscus collimating lens 1 first narrows the diameter of a beam in a direction of the optical axis of the lens at an incident surface 1a, and increases the diameter in a direction away from the optical axis 2 during emission of the beam from a light-emitting surface 1b so as to collimate the beam. This can lead to an increase in the outer diameter of the collimating lens 1. Accordingly, the size of a driving mechanism for moving the collimating lens 1 in the direction orthogonal to the optical axis is correspondingly increased, and a reduction in power consumption also becomes difficult.

Moreover, since a principal point (intersection of the optical axis and perpendicular lines dropped from intersections of a light beam entering the lens (including extended line) and a light beam emitted from the lens (including extended line) to the optical axis) 3 is located at a side on which a front focus 4 lies remote from the incident surface 1a of the collimating lens 1, the collimating lens 1 is always located outside a focal length W0 (right side of Fig. 8). Therefore, it is disadvantageously difficult to reduce the size of the entire optical system.

The present invention is produced so as to solve the above-described problems. An object of the present invention is to provide a holographic reproducing apparatus capable of regulating aberration to a low level and suitable for reducing the size and the power consumption of the entire optical system.

### Means of Solving the Problems

A holographic reproducing apparatus according to the present invention includes a light source including laser-beam emitting regions arranged in an array, a converting lens that converts a laser beam emitted from the light source into a collimated reference beam, reference-beam adjusting means that adjusts and outputs the reference beam such that the reference beam enters a recording medium including multiple-recorded data information at a predetermined incident angle, and data reproducing means that reads out holographic information to be reproduced from the recording medium and converts the information into electrical signals. When the light source is located at an incident side of the converting lens and the reference-beam adjusting means is located at a light-emitting side of the converting lens, the converting lens has the principal point at the light-emitting side.

In the above-described apparatus, the reference-beam adjusting means preferably includes a reflecting mirror and driving means capable of changing the angle of the reflecting mirror about at least one axis.

With this, when the reflecting mirror is pivoted on two axes, for example, the optical axis of the reference beam can be changed in the thickness direction of the recording medium. Thus, the converting lens can be brought close to the recording medium, resulting in a thin holographic reproducing apparatus.

The converting lens is preferably a forward meniscus lens having a convex surface at the light-emitting side and a flat or concave surface at the incident side.

With this, the converting lens can be disposed between the light source and the principal point of the converting lens, and the distance between the light source and the reflecting mirror can be reduced. Thus, the entire system constituting the optical system can be reduced in size.

Moreover, at least one of the concave surface and the convex surface is preferably aspherical. Furthermore, the converting lens is preferably a single glass lens including the concave surface and the convex surface.

With this, the aberration can be regulated to a certain level or lower in a predetermined operating temperature range. Moreover, the lens can be easily produced at low cost.

Furthermore, the lens preferably has a convex shape whose thickness at the center is larger than the thickness at the peripheral portion.

That is, a convex (positive) meniscus lens can be used.

Moreover, the light source is preferably of a one-dimensional array including a plurality of laser emitting means arranged in a linear manner or of a two-dimensional array including a plurality of laser emitting means arranged in a planar manner.

When the plurality of laser emitting means are arranged in the two-dimensional array, the image height of the lens can be reduced as compared with the case when the plurality of laser emitting means are arranged in the one-dimensional array. Therefore, the aberration can be regulated to a low level when the laser in use is switched, i.e., when any of the other lasers is used.

Moreover, microlenses for expanding radiation angles of laser beams are preferably disposed on the optical axes of the laser emitting means.

With this, the intensity distribution of the reference beam can be made uniform by shaping the beam even when surface emitting lasers whose beam diameter (full width at half maximum) is small are used.

For example, the microlenses are plano-concave.

Moreover, the holographic reproducing apparatus can further include a fixing base on which the light source and the converting lens are fixed, and the light source and the converting lens can be held by the fixing base while the center of the optical axis of the light source coincides with the optical axis of the converting lens such that at least one of the light source and the converting lens is movable in the optical axis direction.

With this, the positions of the converting lens and the light source can be finely adjusted such that the light source is located at the focal position of the converting lens, and defocused components of the reference beam can be minimized. Thus, a holographic reproducing apparatus having no effects on reproduction of data information can be realized.

The light source preferably constitutes a light source unit including a base on which a plurality of laser emitting means are disposed and an auxiliary base on which a plurality of microlenses facing the laser emitting means are disposed, and the auxiliary base is preferably fixed to the base such that the microlenses are disposed on the optical axes of the corresponding laser emitting means disposed on the base.

With this, the plurality of laser emitting means and the corresponding microlenses are integrated into a unit in advance while being finely adjusted. Thus, subsequent assembling work and adjustment can be facilitated, and as a result, a holographic reproducing apparatus can be realized at low cost.

### Advantages

According to the present invention, the outer dimensions of the converting lens that collimates the laser beam and the focal length can be reduced. Thus, the entire optical system can be reduced in size.

Moreover, the aberration of the reference beam output from the converting lens can be regulated to a small level since the image height can be regulated to a low level. Best Mode for Carrying Out the Invention

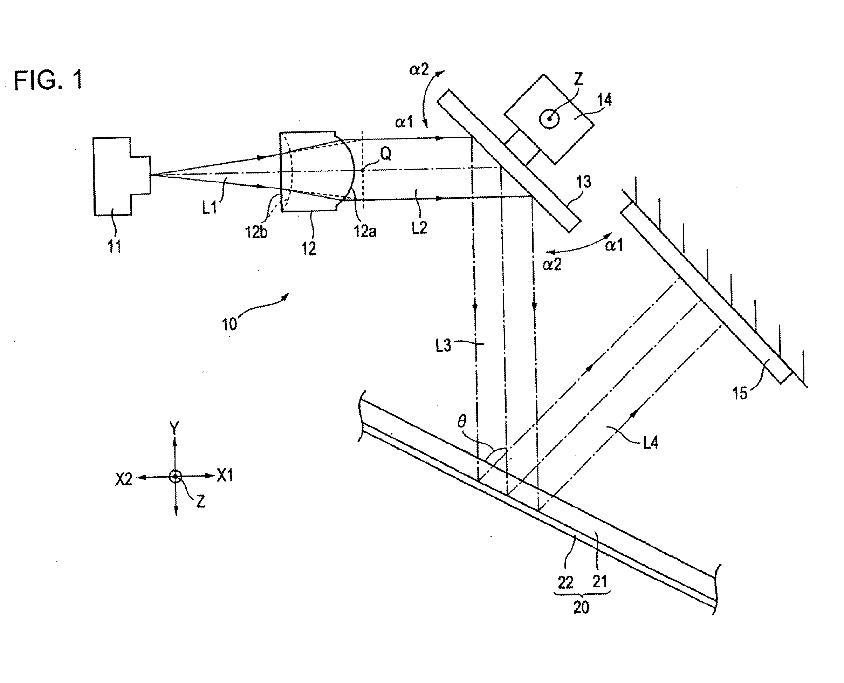

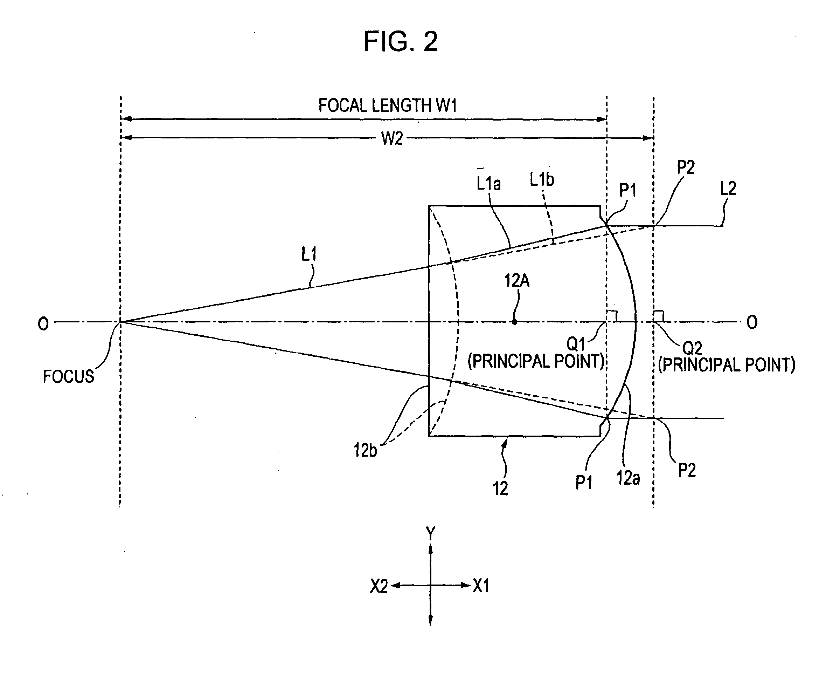

Fig. 1 illustrates a schematic view of a holographic reproducing apparatus according to an embodiment of the present invention. Fig. 2 illustrates a converting lens serving as a principal part of the present invention. Fig. 1 shows a mechanism for reproducing information from transmissive recording media in the holographic reproducing apparatus.

As shown in Fig. 1, a holographic reproducing apparatus 10 of the present invention is formed of an optical system mainly including a light source 11, a converting lens (collimating lens) 12, a reflecting mirror 13, mirror driving means 14, and reproducing means 15.

The light source 11 is formed of laser emitting means in which laser-beam emitting regions such as vertical-cavity surface emitting lasers (hereinafter referred to as VCSEL) are arranged in an array. This includes, for example, a one-dimensional array in which a plurality of laser emitting means are arranged in a linear manner or a two-dimensional array in which a plurality of laser emitting means are arranged in a planar manner as described below.

The converting lens 12 and the reflecting mirror 13 are disposed on the optical path of the light source 11. The reflecting mirror 13 is disposed on the mirror driving means 14, and is supported so as to be pivotable on at least one axis (Z axis in Fig. 1) in an α1 direction and an α2 direction shown in Fig. 1. The mirror driving means can adjust the angle of the reflecting mirror 13 (incident angle and reflecting angle) in fine increments using, for example, electromagnetically driving means. That is, the reflecting mirror 13 and the mirror driving means 14 constitute a so-called galvanometer mirror.

The converting lens 12 is disposed between the light source 11 and the reflecting mirror 13. The converting lens 12 converts a laser beam (divergent beam) L1 emitted from the light source 11 into a parallel reference beam L2. The reference beam L2 is output toward the reflecting mirror 13.

Next, the reference beam L2 collimated by the converting lens 12 is reflected by the reflecting mirror 13, and illuminates a predetermined position on a recording medium 20 as a reference beam L3.

At this moment, the angle of the reflecting mirror 13 is adjusted using the mirror driving means 14 such that the reference beam can illuminate the predetermined position on the recording medium 20. Therefore, the reference beam L3 output from the reflecting mirror 13 is reflected from the reflecting layer 22, and is output outside the recording medium 20 as a reproduction beam L4.

The recording medium 20 shown in this embodiment is a so-called reflective recording medium including a recording layer 21 on which interference fringes can be recorded and the reflecting layer 22 disposed under the recording layer 21. Holograms indicating many pieces of data information are recorded as interference fringes (checkered, two-dimensional dot pattern) in the recording layer 21 in a multiplexed manner while the recording angle is changed. Accordingly, the reproduction beam L4 includes data information corresponding to the interference fringes.

The reproducing means 15 is disposed on the optical path of the reproduction beam L4 output from the recording medium 20. The reproducing means 15 can include, for example, a CCD sensor or a CMOS image sensor. When the reproduction beam L4 is incident on the reproducing means 15 at a predetermined incident angle θ, the reproducing means 15 can read out only the pieces of data information recorded on positions where the relationship between the incident angle θ and the wavelength λ of the reproduction beam L4 satisfies the given Bragg condition from the many pieces of data information included in the reproduction beam L4.

Since the incident angle θ of the reference beam L3 incident on the recording medium 20 can be changed by driving the mirror driving means 14 and adjusting the angle of the reflecting mirror 13 in fine increments, the pieces of data information recorded in the recording layer 21 of the recording medium 20 in a multiplexed manner can be read out individually.

When an X2 side at which the light source 11 is disposed is defined as an incident side and an X1 side at which the reflecting mirror 13 is disposed is defined as a light-emitting side with respect to the converting lens 12 as shown in Fig. 2, the converting lens 12 is preferably a forward meniscus lens whose surface 12a adjacent to the light-emitting side (X1 side; hereinafter, referred to as "light-emitting surface") is a convex surface protruding in an X1 direction shown in Fig. 2, and whose surface 12b adjacent to the incident side (X2 side; hereinafter, referred to as "incident surface") is a flat or concave surface recessed in the X1 direction shown in Fig. 2.

When the incident surface 12b of the converting lens 12 serving as a forward meniscus lens is flat as shown in Fig. 2, a principal point Q1, serving as an intersection of the optical axis O-O and perpendicular lines dropped from intersections P1 of extended lines (solid lines) L1a of the light beam incident on the lens (laser beam L1) and the light beam emitted from the lens (reference beam L2), is located at at least the light-emitting side remote from the center 12A of the lens in the thickness direction (X directions) thereof. Moreover, when the incident surface 12b is concave, a principal point Q2, serving as an intersection of the optical axis O-O and perpendicular lines dropped from intersections P2 of extended lines (dashed lines) L1b of the light beam incident on the lens (laser beam L1) and the light beam emitted from the lens (reference beam L2), is located outside the converting lens 12 at the light-emitting side.

Therefore, most of the converting lens 12 can be disposed within a focal length W1 or W2 serving as a distance between the light source 11 (focus) and the principal point Q1 or Q2, respectively. Thus, the size of the entire optical system constituting the holographic reproducing apparatus 10 can be reduced.

Moreover, in the forward meniscus lens constituting the converting lens 12, the diameter of the laser beam L1 does not need to be reduced in the optical axis direction unlike the inverse meniscus lens described in the background art. Accordingly, the effective diameter of the converting lens 12 through which the laser beam L1 passes can be reduced, and furthermore, the outer dimensions thereof can be regulated to small values.

Moreover, the converting lens 12 is preferably a single glass lens in which the light-emitting surface 12a and the incident surface 12b are integrated with each other. With this, the aberration in a predetermined operating temperature range can be regulated at a specific level or less as compared with, for example, a coupling lens in which two or more lenses are integrated with each other. Furthermore, the lens can be easily produced at low cost, and the size and the weight of the lens can be reduced.

Moreover, the light-emitting surface 12a serving as a convex surface is preferably aspherical, and furthermore, the incident surface 12b is also preferably aspherical when the incident surface 12b is concave. When at least the light-emitting surface 12a of the converting lens 12 is made aspherical as described above, the aberration in the reference beam L2 can be reduced.

When the recording medium 20 is deformed in accordance with changes in environmental temperature, the spacing of the interference fringes recorded in the recording layer 21 is increased or decreased, and the given relationship (Bragg condition) is not satisfied any longer even when the reference beam L2 having the same wavelength λ is incident on the recording medium 20 at the same incident angle θ. As a result, there is a possibility that the data information is not read out correctly.

Therefore, a holographic reproducing apparatus capable of correctly reproducing information even when the spacing of the interference fringes recorded in the recording medium 2 is increased or decreased will now be described.

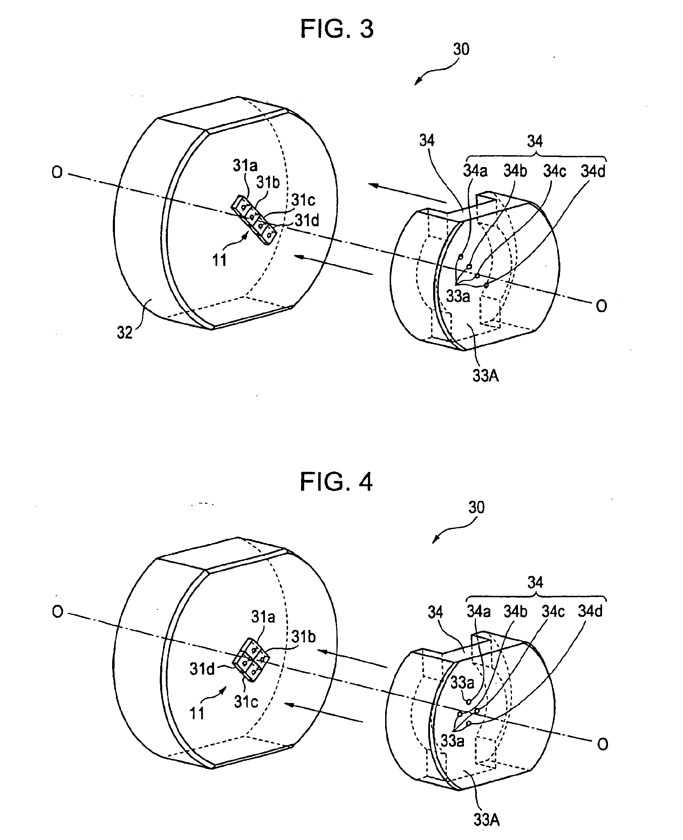

Fig. 3 is an exploded perspective view illustrating a first structure of the light source used in the holographic reproducing apparatus of the present invention. Fig. 4 is an exploded perspective view illustrating a second structure of the light source.

As shown in Fig. 3, the light source 11 constitutes a light source unit 30 including a plurality of laser emitting means 31.

The light source unit 30 includes a base 32 and an auxiliary base 33 positioned and fixed on the base 32. A plurality of laser emitting means 31a, 31b, 31c, and 31d arranged along a predetermined straight line so as to form a one-dimensional array are fixed on a surface of the base 32. The laser emitting means 31a, 31b, 31c, and 31d have similar but different wavelength bands. The wavelength bands of two adjacent laser emitting means preferably do not overlap with each other. However, the wavelength bands can slightly overlap with each other.

In the light source unit 30 having such a structure, the given relationship (Bragg condition) between the incident angle θ and the wavelength λ of the reference beam L2 can be satisfied by selecting an optimum laser emitting means 31 from the laser emitting means 31a, 31b, 31c, and 31d having the different wavelengths even when the spacing of the interference fringes recorded in the recording medium is increased or decreased in accordance with changes in environmental temperature. With this, the data information can be correctly read out. That is, since the wavelength tunable range of the light source 11 can be expanded, a holographic reproducing apparatus capable of also responding to temperature fluctuation can be provided.

However, in the above-described embodiment, the plurality of laser emitting means 31a, 31b, 31c, and 31d are arranged in a line (one-dimensional array), and thus the image heights generated by the laser emitting means 31a and 31d located at outer positions of the laser emitting means 31b and 31c become larger than those generated by the laser emitting means 31b and 31c located at inner positions close to the optical axis O-O. This leads to an increase in aberration.

Therefore, in a second structure shown in Fig. 4, the laser emitting means 31a, 31b, 31c, and 31d are equally brought close to the optical axis O-O and disposed around the optical axis O-O at equal distances on the surface of the base 32 so as to form a planar two-dimensional array.

In the embodiment shown in Fig. 4, the image heights generated by the laser emitting means 31a, 31b, 31c, and 31d can be reduced to approximately one-third of the maximum image heights generated by the one-dimensional array in the first structure (Fig. 3), and the aberration can be regulated to a specific level or lower.

Moreover, in the structures shown in Figs. 3 and 4, holes 33a corresponding to the laser emitting means 31a, 31b, 31c, and 31d are formed in a stage 33A of the auxiliary base 33, and plano-convex microlenses 34 (34a, 34b, 34c, and 34d), for example, are disposed inside the holes 33a.

The auxiliary base 33 is positioned by being slid along the end surface of the base 32 such that the microlenses 34a, 34b, 34c, and 34d are disposed on the optical axes of the laser emitting means 31a, 31b, 31c, and 31d, respectively.

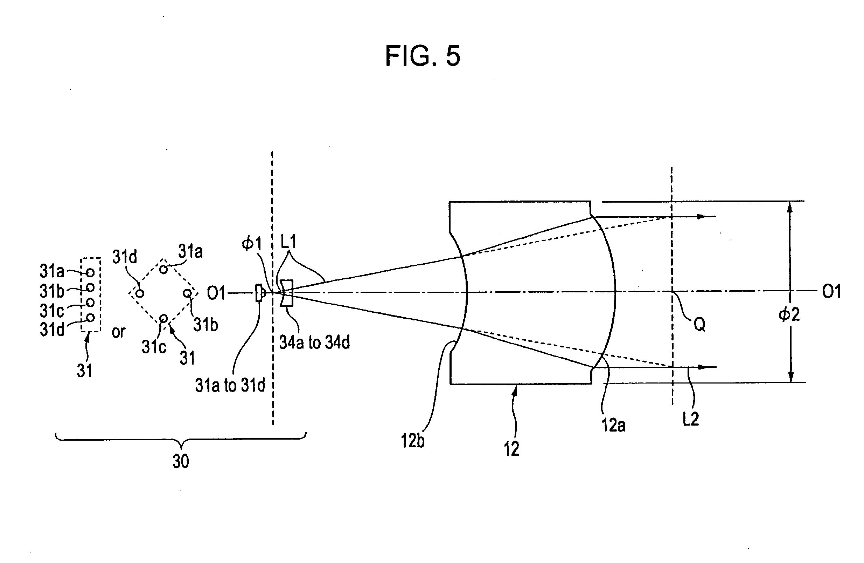

Fig. 5 illustrates the converting lens shown in Fig. 2 when the microlenses are disposed on the optical path.

As shown in Fig. 5, the diameter of the laser beam L1 emitted from the laser emitting means 31 (any of the laser emitting means 31a, 31b, 31c, and 31d) is increased by the corresponding microlens 34, and the expanded laser beam L1 is emitted toward the converting lens 12. The diameter of the laser beam is further increased in the converting lens 12, and then the beam is converted into the parallel reference beam L2.

Since the laser emitting means 31 is a VCSEL (surface emitting laser), the beam diameter φ1 thereof is extremely small as compared with the effective diameter φ2 of the converting lens 12 (φ2 >> φ1). Therefore, when the laser beam L1 output from the laser emitting means 31 is directly incident on the converting lens 12 without using the microlenses 34, the intensity distribution of the reference beam L2 output from the converting lens 12 becomes nonuniform. However, as shown in this embodiment, the intensity distribution of the reference beam L2 output from the converting lens 12 can be made uniform by increasing the beam diameter φ1 of the laser beam L1 output from the laser emitting means 31 using the microlenses 34 before the laser beam L1 enters the converting lens 12.

Next, a method for assembling an optical system including the light source unit 30 will be described.

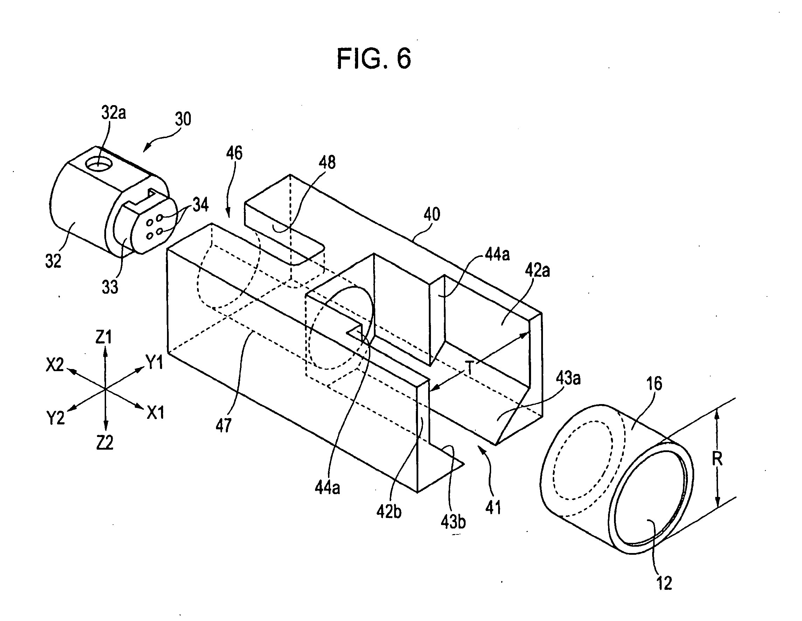

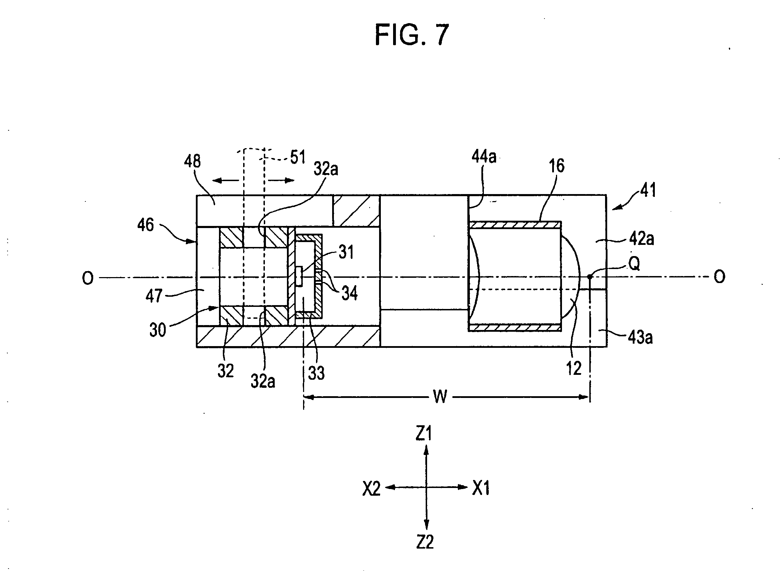

Fig. 6 is an exploded perspective view of the optical system. Fig. 7 is a cross-sectional view illustrating the assembled optical system.

The optical system shown in Fig. 1 includes the light source unit 30, the converting lens 12, and a fixing base 40 for positioning the light source unit 30 and the converting lens 12.

The light source unit 30 is the same unit as that shown in Fig. 4, and includes the laser emitting means 31a, 31b, 31c, and 31d arranged in a two-dimensional array and the microlenses 34a, 34b, 34c, and 34d corresponding to the laser emitting means. In addition, the base 32 constituting the light source unit 30 has through-holes 32a linearly passing through surfaces thereof at Z1 and Z2 sides in Z directions.

The converting lens 12 is a forward meniscus lens, and the outer circumferential surface thereof is fixed to the inner wall of a lens barrel 16.

Moreover, the fixing base 40 is formed by, for example, die-casting an aluminum rectangular sold block, and includes a first holding portion 41 formed at the X1 side and a second holding portion 46 formed at the X2 side.

The first holding portion 41 includes side wall portions 42a and 42b facing each other in Y directions shown in Fig. 6 and slopes 43a and 43b inclined from approximately intermediate portions of the side wall portions 42a and 42b, respectively, in the height direction. The interval T between the side wall portions 42a and 42b is set slightly larger than the outer diameter R of the lens barrel 16. The slopes 43a and 43b form an approximate V shape when viewed from the X1 side, and the outer surface of the lens barrel 16 is held by the slopes 43a and 43b and the side wall portions 42a and 42b when the converting lens 12 is disposed inside the first holding portion 41.

Moreover, stopper walls 44a and 44b are formed on the side wall portions 42a and 42b, respectively, of the first holding portion 41 by reducing the interval T of the side wall portions 42a and 42b. Therefore, the converting lens 12 can be positioned inside the first holding portion 41 by moving the converting lens 12 in an X2 direction and pushing the end surface of the lens barrel 16 at the X2 side against the stopper walls 44a and 44b. After the positioning, the converting lens 12 is fixed at a position among the side wall portions 42a and 42b, the slopes 42a and 42b, and the stopper walls 44a and 44b using a UV adhesive.

The second holding portion 46 has a through-hole 47 with a predetermined inner diameter formed in the end surface of the fixing base 40 at the X2 side and extending in the X1 direction. An approximately U-shaped recessed portion 48 is formed in a surface of the fixing base at the Z1 side of the through-hole 47 and extending in the X directions.

The light source unit 30 is fitted into the through-hole 47 of the second holding portion 42. The inner diameter of the through-hole 47 is slightly larger than the outer dimension of the base 32 of the light source unit 30. Accordingly, the light source unit 30 can be moved along the through-hole 47 in the X directions shown in Fig. 6.

Therefore, as shown by dashed lines in Fig. 7, for example, the head end portion of a movable pin 51 for adjustment can be fitted into the through-holes 32a of the base 32 by inserting the movable pin into the recessed portion 48 from outside the fixing base 40. With this structure, the light source unit 30 can be moved in the optical axis direction (X directions) by moving the movable pin 51 in the X1 direction or in the X2 direction. Thus, the distance W between the converting lens 12 and each of the laser emitting means 31a to 31d constituting the light source 11 disposed inside the light source unit 30 can be easily adjusted in fine increments such that the reference beam L2 emitted from the converting lens 12 is accurately collimated. The base 32 is fixed inside the through-hole 47 using a UV adhesive after the fine adjustment of the distance W.

In the above-described assembling method, the fixing base 40 allows the adjustment of the distance W while the optical axis of the converting lens 12 coincides with the center of the optical axis of the light source unit 30 (mean position of the optical axes of the laser emitting means 31a, 31b, 31c, and 31d). That is, since the light source unit 30 can be assembled accurately in the Y directions and the Z directions, assembling of the entire unit can be facilitated.

In the above-described assembling method, the distance W can be finely adjusted by adjusting the position of the converting lens 12 in the first holding portion 41 in the X directions after the light source unit 30 is fixed inside the through-hole 47 of the second holding portion 46.

In the above-described embodiment, a reflective holographic recording medium is used as an example. However, the present invention is not limited to this, and a transmissive recording medium can be used.

Moreover, a reproducing apparatus is described as an example of a holographic reproducing apparatus using a forward meniscus lens serving as a converting lens. However, the present invention is not limited to this, and a recording apparatus or a recording/reproducing apparatus having both functions of recording and reproducing can be used.

In the above-described embodiment, the reflecting mirror 13 is pivoted on a first axis (Z axis in Fig. 1) by the mirror driving means 14. However, the present invention is not limited to this, and the reflecting mirror 13 can be pivoted on two axes including the first axis and a second axis orthogonal to the first axis. With this structure, the direction of the reference light can be changed in a three-dimensional manner.

### Brief Description of the Drawings

[Fig. 1] Fig. 1 illustrates a schematic view of a holographic reproducing apparatus according to an embodiment of the present invention.
[Fig. 2] Fig. 2 illustrates a converting lens serving as a principal part of the present invention.
[Fig. 3] Fig. 3 is an exploded perspective view illustrating a first structure of a light source used in the holographic reproducing apparatus of the present invention.
[Fig. 4] Fig. 4 is an exploded perspective view illustrating a second structure of the light source.
[Fig. 5] Fig. 5 illustrates the converting lens shown in Fig. 2 when microlenses are disposed on the optical path of the light source.
[Fig. 6] Fig. 6 is an exploded perspective view of an optical system.
[Fig. 7] Fig. 7 is a cross-sectional view illustrating the assembled optical system shown in Fig. 6.
[Fig. 8] Fig. 8 illustrates a known technology including an inverse meniscus collimating lens.

### Reference Numerals

- 10: holographic reproducing apparatus
- 11: light source
- 12: converting lens (forward meniscus lens)
- 12a: light-emitting surface
- 12b: incident surface
- 13: reflecting mirror
- 14: mirror driving means
- 15: reproducing means
- 16: lens barrel
- 20: recording medium
- 21: recording layer
- 22: reflecting layer
- 30: light source unit
- 31,: 31a, 31b, 31c, and 31d laser emitting means
- 32: base
- 33: auxiliary base
- 34, 34a, 34b, 34c, and 34d: microlenses (plano-concave lens)
- 40: fixing base
- 41: first holding portion
- 42a and 42b: side wall portions
- 43a and 43b: slopes
- 44a and 44b: stopper walls
- 46: second holding portion
- 47: through-hole
- 48: recessed portion
- O: optical axis
- Q, Q1, and Q2: principal points

## Claims

1. A holographic reproducing apparatus (10) comprising:
a light source (11);
a converting lens (12) that converts a laser beam (L1) emitted from the light source (11) into a collimated reference beam (L2);
reference-beam adjusting means that adjusts and outputs the reference beam such that the reference beam enters a recording medium (20) including multiple-recorded data information at a predetermined incident angle (θ); and
data reproducing means (15) that reads out holographic information to be reproduced from the recording medium (20) and converts the information into electrical signals; **characterized in that** the light source (11) includes two ore more laser-beam emitting regions (31a, 31b, 31c, 31d) arranged in an array;
the light source (11) is located at an incident side of the converting lens (12), the reference-beam adjusting means is located at a light-emitting side of the converting lens (12), and the converting lens (12) has the principal point (Q) at the light-emitting side.

2. The holographic reproducing apparatus (10) according to Claim 1, wherein the reference-beam adjusting means includes a reflecting mirror (13) and driving means (14) capable of changing the angle of the reflecting mirror (13) about at least one axis.

3. The holographic reproducing apparatus (10) according to Claim 1 or 2, wherein the converting lens (12) is a forward meniscus lens having a convex surface (12a) at the light-emitting side and a flat or concave surface (12b) at the incident side.

4. The holographic reproducing apparatus (10) according to Claim 3, wherein at least one of the concave surface (12b) and the convex surface (12a) is aspherical.

5. The holographic reproducing apparatus (10) according to any one of Claims 1 to 4, wherein the lens (12) has a convex shape whose thickness at the center is larger than the thickness at the peripheral portion.

6. The holographic reproducing apparatus (10) according to any one of Claims 1 to 5, wherein the light source (11) is of a one-dimensional array including a plurality of laser emitting means (31a, 31b, 31c, 31d) arranged in a linear manner or of a two-dimensional array including a plurality of laser emitting means (31a, 31b, 31c, 31d) arranged in a planar manner.

7. The holographic reproducing apparatus (10) according to Claim 6, wherein microlenses (34) for expanding radiation angles of laser beams are disposed on the optical axes of the laser emitting means (31).

8. The holographic reproducing apparatus (10) according to Claim 7, wherein the microsenses (34) are plano-concave.

9. The holographic reproducing apparatus (10) according to Claim 1, further comprising:
a fixing base (40) on which the light source (11) and the converting lens (12) are fixed, wherein
the light source (11) and the converting lens (12) are held by the fixing base (40) while the center of the optical axis of the light source (11) coincides with the optical axis of the converting lens (12) such that at least one of the light source (11) and the converting lens (12) is movable in the optical axis direction.

10. The holographic reproducing apparatus (10) according to Claim 1, wherein
the light source (11) constitutes a light source unit (30) including a base (32) on which a plurality of laser emitting means (31) are disposed and an auxiliary base (33) on which a plurality of microlenses (34) facing the laser emitting means (31) are disposed, and
the auxiliary base (33) is fixed to the base (32) such that the microlenses (34) are disposed on the optical axes of the corresponding laser emitting means (31) disposed on the base (32).

## Patentansprüche

1. Holographische Wiedergabevorrichtung (10), aufweisend:
eine Lichtquelle (11);
eine Wandlerlinse (12), die einen von der Lichtquelle (11) emittierten Laserstrahl (L1) in einen kollimierten Referenzstrahl (L2) umwandelt;
eine Referenzstrahl-Einstelleinrichtung, die den Referenzstrahl derart einstellt und abgibt, dass der Referenzstrahl in ein Aufzeichnungsmedium (20), das Mehrfachzeichnungs-Dateninformation beinhaltet, in einem vorbestimmten Eintrittswinkel (θ) eintritt; und
eine Datenwiedergabeeinrichtung (15), die von dem Aufzeichnungsmedium (20) wiederzugebende holographische Information ausliest und die Information in elektrische Signale umwandelt;
**dadurch gekennzeichnet, dass** die Lichtquelle (11) zwei oder mehr Laserstrahl-Emissionsbereiche (31a, 31b, 31c, 31d) aufweist, die in einer Anordnung angeordnet sind, dass sich die Lichtquelle (11) auf einer Eintrittsseite der Wandlerlinse (12) befindet und sich die Referenzstrahl-Einstelleinrichtung auf einer Lichtemissionsseite der Wandlerlinse (12) befindet, und dass die Wandlerlinse (12) den Hauptpunkt (Q) auf der Lichtemissionsseite aufweist.

2. Holographische Wiedergabevorrichtung (10) nach Anspruch 1,
wobei die Referenzstrahl-Einstelleinrichtung einen Reflexionsspiegel (13) und eine Antriebseinrichtung (14) aufweist, die in der Lage ist, den Winkel des Reflexionsspiegels (13) um mindestens eine Achse zu ändern.

3. Holographische Wiedergabevorrichtung (10) nach Anspruch 1 oder 2,
wobei es sich bei der Wandlerlinse (12) um eine vorwärts gerichtete Meniskuslinse mit einer konvexen Oberfläche (12a) auf der Lichtemissionsseite und einer ebenen oder konkaven Oberfläche (12b) auf der Eintrittsseite handelt.

4. Holographische Wiedergabevorrichtung (10) nach Anspruch 3,
wobei mindestens eine von der konkaven Oberfläche (12b) und der konvexen Oberfläche (12a) asphärisch ist.

5. Holographische Wiedergabevorrichtung (10) nach einem der Ansprüche 1 bis 4,
wobei die Linse (12) eine konvexe Formgebung aufweist, deren Dicke im Zentrum größer ist als die Dicke in dem peripheren Bereich.

6. Holographische Wiedergabevorrichtung (10) nach einem der Ansprüche 1 bis 5,
wobei es sich bei der Lichtquelle (11) um eine eindimensionale Anordnung handelt, die eine Mehrzahl von in linearer Weise angeordneten Laseremissionseinrichtungen (31a, 31b, 31c, 31d) beinhaltet, oder um eine zweidimensionale Anordnung handelt, die eine Mehrzahl von in planarer Weise angeordneten Laseremissionseinrichtungen (13a, 31b, 31c, 31d) beinhaltet.

7. Holographische Wiedergabevorrichtung (10) nach Anspruch 6,
wobei Mikrolinsen (34) zum Erweitern von Strahlungswinkeln von Laserstrahlen auf den optischen Achsen der Laseremissionseinrichtungen (31) angeordnet sind.

8. Holographische Wiedergabevorrichtung (10) nach Anspruch 7,
wobei die Mikrolinsen (34) plankonkav sind.

9. Holographische Wiedergabevorrichtung (10) nach Anspruch 1,
die weiterhin Folgendes aufweist:
eine Fixierbasis (40), an der die Lichtquelle (11) und die Wandlerlinse (12)
festgelegt sind, wobei
die Lichtquelle (11) und die Wandlerlinse (12) durch die Fixierbasis (40) derart gehalten sind, dass das Zentrum der optischen Achse der Lichtquelle (11) mit der optischen Achse der Wandlerlinse (12) derart übereinstimmt, dass zumindest eine von der Lichtquelle (11) und der Wandlerlinse (11) in Richtung der optischen Achse beweglich ist.

10. Holographische Wiedergabevorrichtung (10) nach Anspruch 1,
wobei die Lichtquelle (11) eine Lichtquelleneinheit (30) bildet, die eine Basis (32), auf der eine Mehrzahl von Laseremissionseinrichtungen (31) angeordnet ist, sowie eine Hilfsbasis (33) beinhaltet, auf der eine Mehrzahl von den Laseremissionseinrichtungen (31) zugewandten Mikrolinsen (34)
angeordnet ist, und
wobei die Hilfsbasis (33) an der Basis (32) derart festgelegt ist, dass die Mikrolinsen (34) auf den optischen Achsen der entsprechenden, auf der Basis (32) angeordneten Laseremissionseinrichtungen (31) angeordnet sind.

## Revendications

1. Dispositif de reproduction holographique (10) comprenant :
une source de lumière (11) ;
une lentille de conversion (12) qui convertit un faisceau laser (L1) émis par la source de lumière (11) en un faisceau de référence collimaté (L2) ;
un moyen de réglage du faisceau de référence qui règle et délivre en sortie le faisceau de référence de sorte que le faisceau de référence entre dans un support d'enregistrement (20) incluant des informations de données enregistrées multiples avec un angle d'incidence prédéterminé (θ) ; et
un moyen de reproduction de données (15) qui lit sur le support d'enregistrement (20) des informations holographiques à reproduire et qui convertit les informations en signaux électriques ;
**caractérisé en ce que** la source de lumière (11) comporte deux régions d'émission de faisceaux laser ou plus (31a, 31b, 31c, 31d) agencées en une matrice ;
la source de lumière (11) est située du côté incident de la lentille de conversion (12), le moyen de réglage de faisceau de référence est situé du côté émission de lumière de la lentille de conversion (12), et la lentille de conversion (12) a le point principal (Q) du côté émission de lumière.

2. Dispositif de reproduction holographique (10) selon la revendication 1, dans lequel le moyen de réglage du faisceau de référence comporte un miroir réfléchissant (13) et un moyen de commande (14) capable de modifier l'angle du miroir réfléchissant (13) autour d'un axe au moins.

3. Dispositif de reproduction holographique (10) selon la revendication 1 ou 2, dans lequel la lentille de conversion (12) est une lentille à ménisque avant ayant une surface convexe (12a) du côté émission de lumière et une surface plate ou concave (12b) du côté incident.

4. Dispositif de reproduction holographique (10) selon la revendication 3, dans lequel au moins une surface parmi la surface concave (12b) et la surface convexe (12a) est asphérique.

5. Dispositif de reproduction holographique (10) selon l'une quelconque des revendications 1 à 4, dans lequel la lentille (12) a une forme convexe dont l'épaisseur au centre est plus grande que l'épaisseur à la partie périphérique.

6. Dispositif de reproduction holographique (10) selon l'une quelconque des revendications 1 à 5, dans lequel la source de lumière (11) est d'une matrice unidimensionnelle incluant une pluralité de moyens d'émission laser (31a, 31b, 31c, 31d) d'une manière linéaire ou d'une matrice bidimensionnelle incluant une pluralité de moyens d'émission laser (31a, 31b, 31c, 31d) agencés d'une manière plane.

7. Dispositif de reproduction holographique (10) selon la revendication 6, dans lequel des microlentilles (34) pour augmenter les angles de rayonnement des faisceaux laser (31) sont disposées sur les axes optiques des moyens d'émission laser (31).

8. Dispositif de reproduction holographique (10) selon la revendication 7, dans lequel les microlentilles (34) sont planes-concaves.

9. Dispositif de reproduction holographique (10) selon la revendication 1, comprenant en outre :
une base de fixation (40) sur laquelle sont fixées la source de lumière (11) et la lentille de conversion (12), dans lequel
la source de lumière (11) et la lentille de conversion (12) sont maintenues par la base de fixation (40) tandis que le centre de l'axe optique de la source de lumière (11) coïncide avec l'axe optique de la lentille de conversion (12) de sorte qu'au moins un élément parmi la source de lumière (11) et la lentille de conversion (12) est mobile dans la direction de l'axe optique.

10. Dispositif de reproduction holographique (10) selon la revendication 1, dans lequel
la source de lumière (11) constitue une unité de source de lumière (30) incluant une base (32) sur laquelle sont disposés une pluralité de moyens d'émission laser (31) et une base auxiliaire (33) sur laquelle sont disposés une pluralité de microlentilles (34) tournées vers les moyens d'émission laser (31), et
la base auxiliaire (33) est fixée à la base (32) de sorte que les microlentilles (34) sont disposées sur les axes optiques des moyens d'émission laser correspondants (31) disposés sur la base (32).
